# EUROPÄISCHE PATENTSCHRIFT

(11) **EP 2 694 259 B1**
(45) Veröffentlichungstag und Bekanntmachung des Hinweises auf die Patenterteilung: **23.07.2014**
(21) Anmeldenummer: 12714643.9
(22) Anmeldetag: 04.04.2012
(51) Int. Cl.: B26D 3/28

(54) **LEBENSMITTELHOBEL**
VEGETABLE SLICER
COUPE-LÉGUMES

(30) Priorität: 06.04.2011 DE 102011001853
(43) Veröffentlichungstag der Anmeldung: 12.02.2014
(73) Patentinhaber: Leifheit AG, 56377 Nassau (DE)
(72) Erfinder: FISCHER, Klaus-Jürgen, 56379 Holzappel (DE); DITT, Thomas, 55271 Stadecken-Elsheim (DE); KLOTZ, Markus, 56357 Hainau (DE)
(74) Vertreter: Tersteegen, Felix
(86) Internationale Anmeldenummer: PCT/EP2012/056241
(87) Internationale Veröffentlichungsnummer: WO 2012/136742

(56) Entgegenhaltungen:
- DE-A1-102004 017 334
- US-A- 1 296 091

## Beschreibung

### Technisches Gebiet

Die Erfindung betrifft einen Lebensmittelhobel mit einer Gleitbahn und einem längs der Gleitbahn hin- und her beweglichen Schneidguthalter für zumindest ein in Scheiben zu schneidendes Lebensmittel, wobei die Gleitbahn wenigstens ein Schneidmesser aufweist, das über eine, von dem bewegten Schneidguthalter betätigte Zwangsführung relativ zur Gleitbahn derart beweglich ist, dass in zumindest einer Vorschubrichtung der vor dem Schneidmesser angeordnete Abschnitt der Gleitbahn als Zuführrampe ausgebildet ist, die relativ zur Schneide des Schneidmessers tiefer angeordnet ist.

### Stand der Technik

Derartige Lebensmittelhobel sind aus der DE 10 2004 017 334 A1 bekannt. Wesentliches Merkmal dieser Lebensmittelhobel ist die Tatsache, dass sie eine Sicherheitseinrichtung aufweisen, die verhindert, dass bei nicht benötigtem Messer eine Verletzungsgefahr auftritt. Insbesondere wenn derartige Lebensmittelhobel in einem Schrank aufbewahrt werden und eine suchende Hand längs der Gleitfläche bewegt wird, kann es passieren, dass das scharfe Messer mit entsprechender Verletzungsgefahr versehentlich berührt wird.

Um das Verletzungsrisiko zu vermindern, weisen die bekannten Lebensmittelhobel ein schwenkbares Messer auf, mit dem Scheiben des Lebensmitteis beim Übergleiten des Messers durch den Schneidguthalter abgeschnitten werden. Der Schneidguthalter weist bevorzugt Führungsmittel auf, die das Lebensmittel gegen die Gleitfläche anstellen, so dass das Messer die Schneidfunktion ausführen kann. Hierzu ist der Schneidguthalter üblicherweise mit Seitenwangen, die c-förmig die Gleitbahn umgreifen, an der Gleitbahn beweglich gelagert.

Zur Sicherstellung der Schneidfunktion weist der bekannte Lebensmittelhobel eine Aufstellvorrichtung auf, die das Messer dann aufstellt, wenn der Schneidguthalter so weit in Richtung des Messers verfahren ist, dass der vordere oder der rückwärtige Bereich des Schneidguthalters bereits das Schneidguthalters bereits das Messer überdeckt. Umgekehrt bedeutet dies, dass bei fehlendem Schneidguthalter das Messer immer parallel zur Gleitebene angeordnet ist, so dass eine Verletzungsgefahr verringert ist.

Der Schneidguthalter weist zum Aufstellen des Messers eine Zwangsführung auf, die das Messer derart verschwenkt, dass die vordere Schneide relativ zur Gleitbahn hochsteht. Alternativ weisen bekannte Lebensmittelhobel auch ein Herabsenken der Gleitbahn vor dem Messer auf, so dass ebenfalls ein Schneidspalt zwischen der Schneide und der Gleitbahn entsteht. Auch dieses Herabsenken kann über eine Zwangsführung erfolgen, so dass der Sicherheitsaspekt auch hier gewährleistet ist.

Die bekannten Lebensmittelhobel haben den Nachteil, dass sie zum einen nur in einer Richtung aktiv sind, d.h. nur beim Bewegen des Schneidguthalters in eine Richtung kann eine Scheibe des Lebensmittels abgeschnitten werden. Dies bringt zwangsläufig einen Todgang auf dem Rückweg des Schneidguthalters mit sich. Soll dieser Todgang vermieden werden, muss ein zweiter Schneidkomplex vorgesehen werden, der an einer anderen Stelle der Gleitbahn anzuordnen ist und gegensinnig zum ersten Schneidmesser wirkt. Dies hat nicht nur den Nachteil, dass der Aufwand für diese zweite Schneidvorrichtung relativ groß ist, ferner muss die Gleitbahn eine gewisse Länge aufweisen, da der Schneidguthalter beide Schneidvorrichtungen überfahren muss.

Aus der US 1296091 A ist wiederum ein Lebensmittelhobel bekannt, der ein Taumelmesser aufweist, das um eine rechtwinklig zur Gleitachse angeordnete Achse drehbar ist. Dieses Taumelmesser wird über einen Schneidguthalter betätigt, der bei Überfahren des Taumelmessers das Messer derart verdreht, dass sich in Vorschubrichtung ein Spalt zwischen der Schneide des Messers und der Gleitfläche ergibt, wodurch eine untere Scheibe des Lebensmittels abgeschnitten werden kann. Hier bewegt der Schneidguthalter das Messer, das an beiden Seiten Schneiden aufweist, so dass auch während der Rückwärtsfahrt des Schneidguthalters eine Scheibe abgeschnitten werden kann.

Der Nachteil dieser Ausgestaltung besteht darin, dass keine Sicherheitsvorrichtung vorgesehen ist, die eine Verletzungsgefahr reduziert. Darüber hinaus stellt die Mechanik das Messer zwar auf, jedoch ist die Stabilität des Messers ohne Zwangsführung nicht optimal.

### Darstellung der Erfindung

Aufgabe der Erfindung ist es daher, einen Lebensmittelhobel zu schaffen, der bei möglichst geringen Herstellungskosten eine bidirektionale Schneidfunktion aufweist und möglichst sicher zu bedienen ist.

Diese Aufgabe wird durch einen Lebensmittelhobel mit den Merkmalen des Anspruchs 1 gelöst, der insbesondere dadurch gekennzeichnet ist, dass zur Bildung einer bidirektionalen Schneidfunktion zumindest ein Paar von zwei gegenüberliegenden, jeweils in eine Vorschubrichtung wirkenden Zuführrampen vorgesehen ist, wobei an den, an die benachbarte Zuführrampe angrenzenden Ende einer Zuführrampe jeweils wenigstens ein Schneidmesser angeordnet ist und die Zuführrampen an dem, dem Schneidmesser gegenüberliegenden Ende dreh- oder schwenkbar gelagert sind. Die Zwangsführung ist derart ausgebildet, dass bei Bewegen des Schneidguthalters über zumindest einen Teil einer Zuführrampe die Zuführrampen aus einer Ruhelage, in der die Schneidmesser der Zuführrampen in einer Ebene mit einem davor angeordneten Bauteil, insbesondere mit dem gegenüberliegenden Schneidmesser, liegen, zwangsweise relativ zueinander verschwenkt sind.

Durch die erfindungsgemäße Ausgestaltung des Lebensmittelhobels mit zwei gegenüberliegenden Zuführrampen kann nun zuverlässig jeweils ein in Vorschubrichtung vorne liegendes Schneidmesser hochgestellt werden, so dass durch das Überfahren dieses hochgestellten Schneidmessers mit dem Schneidguthalter eine Scheibe des Lebensmittels abgeschnitten werden kann. Alternativ kann auch die Schneidrampe abgesenkt werden, so dass sich ein gleicher Effekt ergibt.

Eine bevorzugte Ausgestaltung des Lebensmittelhobels weist einen Grundkörper, zum Beispiel in Form eines Tragrahmens auf. Dieser beinhaltet die Gleitbahn, längs derer der Schneidguthalter in einer reziproken Bewegung hin- und herbewegt werden kann. Hierzu ist am Grundkörper eine Lagerung für den Schneidguthalter vorgesehen, die einerseits die Verschiebbarkeit und bevorzugt zwei gegenüberliegende Anschläge bietet und andererseits bevorzugt auch Teile der Zwangsführung der Zuführrampen beinhaltet.

Die Zuführrampen bilden den eigentlichen Kern der Gleitbahn oder zusammen auch die gesamte Gleitbahn. Sie sind schwenkbar an dem Rahmen gelagert, so dass sie mit ihrem der gegenüberliegenden Zuführrampe zugewandten, ein oder mehrere Schneidmesser tragenden Ende nach oben oder nach unten verschwenkt werden können, so dass das Schneidmesser zur Bildung eines Hobels freigelegt wird.

An den Enden der Gleitbahn können auf den Schneidguthalter wirkende Federn angeordnet sein, die den Schneidguthalter zum einen in eine mittlere, aus Sicherheitsgründen die Schneidmesser abdeckende Position drängen und zum anderen die Richtungsumkehr unterstützen. Sofern solche Federmittel verwendet werden, sind sie bevorzugt so dimensioniert und angeordnet, dass der in der Mitte der Gleitbahn befindliche Schneidguthalter in dieser Position durch eine aus beiden Richtungen wirkende Federkraft gehalten ist.

Durch die Tatsache, dass zwei gegenüberliegende Zuführrampen vorgesehen sind, die bei einer bevorzugten Ausgestaltung jeweils zwei zueinander parallele Schneidkanten aufweisen, ergibt sich in beide Richtungen ein Schneideffekt. Hierzu wird jeweils eine der beiden Zuführrampen bzw. Schneidkanten bewegt, so dass sich ein Spalt zwischen der Zuführrampe und der Schneidkante ergibt. Dabei bildet das Schneidmesser der - in Vorschubrichtung gesehen - vorderen Zuführrampe das letzte Bahnstück dieser Zuführrampe, während das gegenüberliegende Schneidmesser dann die Schneidfunktion übernimmt.

Ein weiterer Vorteil dieser Ausgestaltung ist die Tatsache, dass die abgeschnittenen Scheiben des Lebensmittels in beide Richtungen jeweils in unterschiedlicher Richtung unter die Gleitbahn fallen. Das bedeutet, dass die in Vorwärtsrichtung abgeschnittenen Scheiben und die in Rückwärtsrichtung abgeschnittenen Scheiben unter der Gleitbahn untereinander zu liegen kommen, so dass sich der unter der Gleitbahn zur Verfügung stehende Raum für das Schneidgut effektiver nutzen lässt. Bevorzugt ist unterhalb der Gleitbahn eine Auffangschale angeordnet, wobei der Lebensmittelhobel auch frei, ohne Auffangschale verwendet werden kann.

Die Zwangsführung ist so ausgebildet, dass sie die notwendige Bewegung der Zuführrampen realisiert. Diese notwendige Bewegung bedingt, dass sich ein Spalt zwischen den gegenüberliegenden Schneiden ergibt. Wie bereits ausgeführt, kann dies entweder dadurch realisiert werden, dass die Zuführrampe mit der am Ende dieser Zuführrampe angeordneten Schneide abgesenkt wird, so dass die gegenüberliegende Schneide freigelegt wird und somit die aktive Schneide für das in Vorschubrichtung bewegte Schneidgut bildet. Hierzu ist die der abgesenkten Zuführrampe gegenüberliegende Zuführrampe dann bevorzugt fest angeordnet bzw. festgelegt, so dass sich diese nicht ebenfalls mit absenkt, wodurch das Freilegen der aktiven Schneide beeinträchtigt oder gar verhindert würde. Darüber hinaus ergibt sich durch das Festlegen der Zuführrampe eine definierte Dicke der abgeschnittenen Scheibe.

Die Zwangsführung kann die jeweiligen Bauteile nach unten bzw. nach oben drücken, ohne sie festzuhalten. Bei der bevorzugten Ausgestaltung werden jedoch die Bauteile fest geführt, so dass sie in beide Richtungen festgelegt sind und sich zwangsläufig Mindestschwenkwinkel ergeben. Dies verhindert, dass eine unbeabsichtigt dünne Scheibe geschnitten wird, etwa weil sich Lebensmittelreste oder sonstige Verschmutzungen in die Mechanik eingelagert haben.

Bevorzugt ist die Zwangsführung von Führungselementen gebildet, die in Führungsnuten eingreifen, wobei die Führungsnuten den Weg der Führungselemente während des Bewegens des Schneidguthalters festlegen. Die Führungselemente können zapfenartig ausgebildet sein und entweder vom Schneidguthalter oder von den Zuführrampen seitlich hervorspringen, wobei die Führungsnuten dann an dem jeweils anderen Bauteil angeordnet sind.

Die Führungsnuten können einfache Einsenkungen oder auch langlochartige Öffnungen sein, wobei die Führungsnuten üblicherweise seitlich offen sind, so dass während der Bewegung des Schneidguthalters die Führungselemente in die Führungsnuten eingreifen und in den Extrempositionen auch wieder außer Eingriff gelangen. Im Sinne der Erfindung sollen als Führungsnuten auch einfache Vorsprünge angesehen werden, die die Führungselemente nach unten zu drücken vermögen, so dass unter dem Begriff Führungsnut auch ein Vorsprung oder Versatz in der dem Führungselement zugewandten Fläche des Schneidguthalters angesehen werden kann.

Da die Führungsnuten bzw. Führungselemente die an dem Schneidguthalter angeordnet sind, nur einen Teil der Gleitbahn überdecken, werden bei den meisten Ausgestaltungen die Führungselemente nicht während der gesamten Bewegung des Schneidguthalters über den vollständigen Verfahrbereich in die Führungsnuten eingreifen. Der Schneidguthalter kann eine Länge aufweisen, die während der gesamten Bewegung sicherstellt, dass ein bestimmter Bereich des Schneidguthalters die Schneiden abdeckt.

In Folge der gegenüberliegenden Rampen ist dies allerdings nicht zwangsläufig erforderlich, da über die Zwangsführung sichergestellt ist, dass keine Schneide freiliegt. Um die Verletzungsgefahr zusätzlich zu reduzieren können die Schneiden so geschliffen sein, dass zumindestens der obere Bereich der Schneide geschliffen ist, so dass die Schneide mit der aktiven Vorderkante etwas tiefer angeordnet ist, als der übrige Bereich der Schneidenoberfläche. Dies verhindert zusätzlich, dass ein überstreichender Finger in den Spalt zwischen die beiden gegenüberliegenden Schneiden gelangen kann, so dass das Verletzungsrisiko zusätzlich reduziert ist.

Grundsätzlich ist es möglich, für jede Zuführrampe separate Führungselemente und Führungsnuten vorzusehen. Eine bevorzugte Ausgestaltung verwendet allerdings gemeinsame Führungsnuten sowie Führungselemente an beiden Zuführrampen. Bei dieser Ausgestaltung weisen die beiden Zuführrampen jeweils Führungselemente auf, die wechselseitig in eine obere oder eine untere Führungsnut an dem Schneidguthalter eingreifen.

Hierzu ist der Schneidguthalter mit seitlichen Seitenwangen versehen, die bei den meisten Lebensmittelhobeln ohnehin zur Führung und Halterung des Schneidguthalters vorgesehen sind. Diese Seitenwangen können beispielsweise die Seitenränder der Gleitbahn C-förmig umfassen, so dass der Schneidguthalter auf der Gleitbahn gehalten und geführt ist. An diesen Seitenwangen können an der Innenseite die Führungsnuten angeordnet sein, wobei die Zwangsführung Mittel aufweisen muss, die dafür Sorge trägt, dass in Vorschubrichtung die jeweils vorderen Führungselemente in die untere Führungsnut zum Herabsenken der vorderen Zuführrampe eingefädelt werden.

Im weiteren Verlauf des Vorschubes erreicht der Schneidguthalter dann die Führungselemente der dahinter angeordneten Zuführrampe. Jetzt muss die Zwangsführung dafür Sorge tragen, dass diese Führungselemente in die obere Nut eingefädelt werden, so dass die hintere Zuführrampe festgelegt wird, also nicht nach unten verschwenkt werden kann. Auf diese Weise ergibt sich zwischen der Schneide des hinteren Schneidmessers und der abgesenkten vorderen Zuführrampe der notwendige Spalt, um die Scheibe des Lebensmittels abschneiden zu können.

Selbstverständlich kann die oben beschriebene Funktion auch umgekehrt ausgeführt werden, in diesem Fall müssen die Führungsmittel dafür Sorge tragen, dass die vordere Zuführrampe festgelegt wird, während die hintere Zuführrampe dann abgesenkt werden muss.

Das wechselseitige Einfädeln der Führungsmittel der unterschiedlichen Zuführrampen in übereinander angeordnete Führungsnuten wird bevorzugt über eine Betätigungswippe vorgenommen. Diese Konstruktion ermöglicht es besonders leicht, zwangsweise die notwendigen Bewegungen vorzunehmen. Die Betätigungswippe kann drehbeweglich am Lebensmittelhobel gelagert sein, wobei auch eine schwimmende Lagerung möglich ist.

Die Betätigungswippe kann z. B. in der Mitte drehbar gelagert bzw. um einen mittigen Drehpunkt drehbar sein. Von diesem Drehpunkt nach vorne und hinten erstrecken sich dann jeweils Tragarme, an deren Enden die Führungselemente angeordnet sind. Hier sind dann an den - aus Sicht des sich in Anfangsposition befindlichen Schneidguthalters - nach vome gerichteten, vorderen Tragarmen Führungselementen für die vordere Zuführrampe, die bei der Bewegung des Schneidguthalters abgesenkt werden muss, vorgesehen. Die nach hinten gerichteten Tragarme tragen dagegen die Führungselemente für die hintere Zuführrampe, die zunächst festgelegt werden muss.

Bewegt sich nun der Schneidguthalter nach hinten, also in Vorschubrichtung, werden zunächst die vorderen Führungselemente der vorderen Zuführrampe die untere Führungsnut eingefädelt. Diese untere Führungsnut muss so ausgebildet sein, dass sie die Führungselemente zunächst etwas nach unten drückt, wobei die Betätigungswippe gedreht werden kann. Dies wiederum bewirkt ein nach oben Verlagern der hinteren Führungselemente der hinteren Zuführrampe, wodurch diese dann in eine Position verlagert werden, die es ermöglicht, die hinteren Führungselemente in die obere Führungsnut einzufädeln.

Nachdem beide Einfädelvorgänge abgeschlossen sind, verlaufen dann die Führungselemente in jeweils unterschiedlichen, übereinander angeordneten Führungsnuten, so dass während der gesamten Vorschubbewegung ein Spalt zwischen den beiden Schneiden der gegenüberliegenden Zuführrampen angeordnet ist. Selbstverständlich ist es auch möglich, dass die hinteren Führungsmittel ortsstabil bleiben, so dass nur die vorderen Führungselemente abgesenkt werden. In diesem Fall kann z. B. die Betätigungswippe schwenkbar um eine durch die hinteren Führungsmittel verlaufende Drehachse gelagert sein.

Erreicht der Schneidguthalter die hintere Position, wird die Vorschubrichtung umgedreht. Nach Überfahren der Schneiden durch den Schneidguthalter werden die Führungselemente wieder aus den hinten offenen Führungsnuten herausgeführt, so dass sie nun wieder frei beweglich sind. Hier kann eine Rückstellfeder dafür Sorge tragen, dass die Betätigungswippe und die Führungselemente wieder in die Ausgangsposition zurückverlagert werden. Die Rückstellfeder kann auf die Führungsmittel, auf die Betätigungswippe oder auch auf die Zuführrampe selbst wirken.

Im weiteren Verlauf der Bewegung wird der Schneidguthalter nun wieder nach vorne verlagert, so dass sich der oben beschriebene Prozess umdreht. Die nun vorne liegenden hinteren Führungselemente werden nun in die untere Führungsnut des Schneidguthalters eingefädelt, so dass sich wieder eine Drehung der Betätigungswippe ergibt, die dafür Sorge trägt, dass die noch frei liegenden Führungselemente, die an den - aus der Ursprungssicht gesehenen - vorderen Tragarmen angeordnet sind, nach oben verlagert werden, so dass sie bei weiterem Vorschub in die obere Führungsnut eingefädelt werden. So ergibt sich ein Spalt zwischen der herabgesenkten hinteren Führungsrampe und der festgelegten vorderen Führungsrampe, so dass auch hier wieder eine Scheibe des Lebensmittels abgeschnitten wird.

Da die durch die Vorwärtsbewegung des Schneidguthalters abgeschnittenen Scheiben nach vorne fallen, während die in der Rückwärtsbewegung des Schneidguthalters abgeschnittenen Scheiben nach hinten fallen, kommen sie hintereinander unterhalb der Gleitfläche zum Liegen, so dass sich zwei mehr oder weniger geordnete Stapel von abgeschnittenen Scheiben des Lebensmittels ergeben. Auf diese Weise können wesentlich mehr Scheiben unterhalb der Schneidbahn zum Liegen kommen, so dass es seltener notwendig wird, die Scheiben unter der Gleitbahn zu entfernen. Darüber hinaus erhöht sich die Arbeitsleistung des Lebensmittelhobels durch die bidirektionale Wirkung, da nun in jede Bewegungsrichtung eine Scheibe abgeschnitten werden kann.

Eine weitere vorteilhafte Ausgestaltung der Erfindung weist eine Schnitthöhenverstellung auf. Hierzu kann der Abstand zwischen den Führungselementen, die in die untere Führungsnut eingreifen, und der Führung des Schneidguthalters variabel sein. Dies kann zum Beispiel dadurch realisiert werden, dass zumindest die untere der Führungsnuten an einer beweglich und verstellbar an den Seitenwangen des Schneidguthalters gelagert ist, wobei Einstellmittel vorgesehen sind, über die sich die Lage dieser Schiene relativ zu den Seitenwangen einstellen lässt. Dies können Rastverbindungen, Einstellschrauben oder ähnliche Mittel sein.

Eine alternative Ausgestaltung kann als untere Führungsnut eine mehrfache Nut aufweisen, die unterschiedliche Tiefen besitzt. Hier ist eine breitere Nut vorgesehen, die wiederum im Nutgrund eine weitere, schmalere Nut aufweist. Bei dieser Ausgestaltung ist der Schneidguthalter so ausgebildet, dass die Nuten relativ zu den Führungselementen nach außen versetzbar sind, so dass je nach Spannweite der Seitenwangen eine andere untere Führungsnut in Eingriff mit den Führungselementen kommt. Wenn die innere, im Nutgrund angeordnete Nut nicht parallel zur äußeren, breiteren Nut verläuft sondern sich nach unten von dem oberen Rand der breiteren, äußeren Nut entfern, wird bei Eingriff der Führungselemente in die inneren Nut eine größere Schnittbreite eingestellt als bei Eingriff in die breitere Nut, deren oberer Rand den Verstellweg der Zuführrampe und damit die Schnittbreite vorgibt.

Alternativ kann natürlich auch ein anderer Schneidguthalter mit einem anderen Nutverlauf verwendet werden. Auch die Führungselemente können zur Höheneinstellung der Zuführrampen verwendet werden. Hierzu können diese austauschbar sein, so dass durch andere Führungselemente eine andere Schnittbreite eingestellt werden kann. Bei entsprechender Ausgestaltung der Führungselemente können diese auch drehbar ausgebildet sein, so dass eine Drehung einen anderen Verlauf des Schneidguthalters bewirken kann.

Der Schneidguthalter oder auch der die Gleitbahn tragende Rahmen können so ausgebildet sein, dass die Zuführrampen bei einer Position des Schneidguthalters, in der dieser die Messer nicht abdeckt, in einer Ebene festgelegt ist, so dass keines der beiden Messer hochsteht oder vor keinem der beiden Messer die Zuführrampe abgesenkt ist. Dies reduziert die Verletzungsgefahr da jedes Messer dann durch ein gegenüberliegendes Messer abgedeckt ist. Um die Verletzungsgefahr weiter zu verringern, ist der Spalt zwischen zwei Messern bevorzugt möglichst klein.

Weitere Merkmale und Vorteile der Erfindung ergeben sich aus den Unteransprüchen und aus der nachfolgenden Beschreibung bevorzugter Ausführungsbeispiele anhand der Zeichnungen.

### Kurze Beschreibung der Zeichnungen

In den Zeichnungen zeigt:
Fig. 1 eine dreidimensionale Ansicht eines erfindungsgemäßen Lebensmittelhobels,
Fig. 2 den Lebensmittelhobel aus Fig. 1 ohne Schneidguthalter,
Fig. 3 eine Seitenansicht des in Fig. 2 dargestellten Lebensmittelhobels,
Fig. 4 eine Schnittansicht des in Fig. 3 dargestellten Lebensmittelhobels, wobei die seitliche Fläche der Gleitfläche weggeschnitten ist,
Fig. 5 die Einzelheit "Z" aus Fig. 4 und
Fig. 6 in einer vergrößerten Ansicht eine der Seitenwangen eine Schneidguthalters im Schnitt.

### Bester Weg zur Ausführung der Erfindung

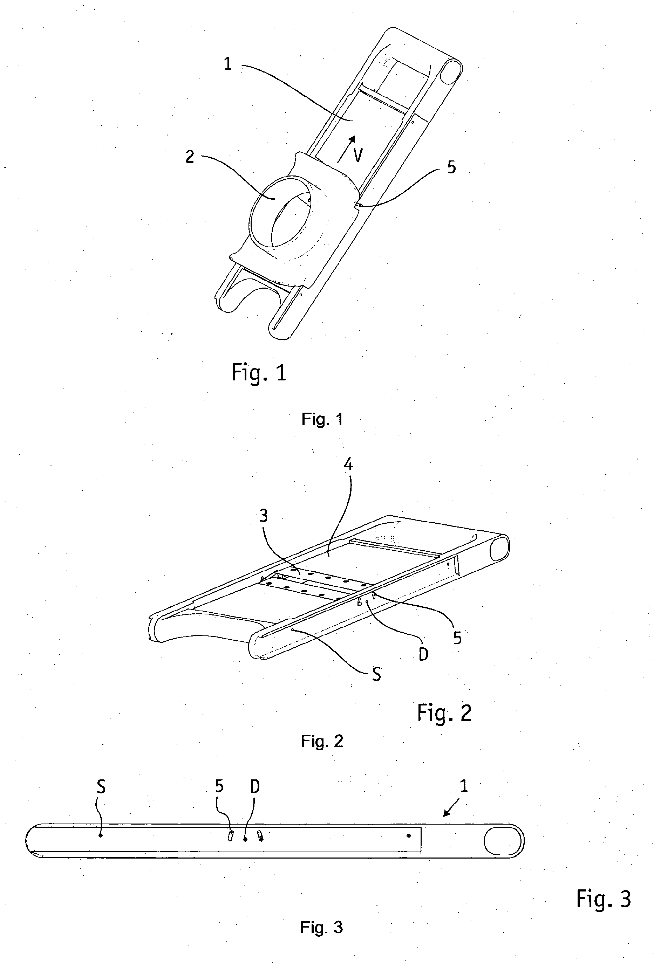

In Figur 1 ist ein erfindungsgemäßer Lebensmittelhobel dargestellt. Der Lebensmittelhobel weist einen Träger mit einer Gleitfläche 1 auf. Der Schneidguthalter 2 ist längs der Gleitfläche 1 in eine Vorschubrichtung V hin und her verschiebbar. Hierzu ist er über Seitenwangen an den Seitenbereichen der Gleitfläche 1 bzw. des Trägers gelagert.

Wie am besten aus Figur 2 ersichtlich ist, weist die Gleitfläche 1 zwei Zuführrampen 4 auf, bzw. ist im dargestellten Ausführungsbeispiel sogar ausschließlich von diesen beiden Zuführrampen 4 gebildet. Die Zuführrampen 4 sind um eine Schwenkachse S schwenkbar am Träger des Lebensmittelhobels gelagert. Dabei sind die Zuführrampen 4 so angeordnet, dass ihre Schneidmesser 3 einander zugewandt sind und einen möglichst kleinen Spalt zwischen sich einschließen. Die Schwenkachsen S sind an den, den Schneidmessem 3 jeweils gegenüberliegenden Enden der Zuführrampen 4 angeordnet. Dies bedingt, dass die beiden Zuführrampen 4 in unterschiedliche Schwenkrichtungen verschwenkt werden.

Zum Abschneiden einer Scheibe des Lebensmittels ist es erforderlich, dass eine der beiden Zuführrampen 4 relativ zur gegenüberliegenden Zuführrampe 4 verschwenkt wird oder dass beide Zuführrampen 4 relativ zueinander bewegt werden. In Vorschubrichtung V muss also entweder die hintere Zuführrampe 4 angehoben werden und/oder die vordere Zuführrampe 4 abgesenkt werden, so dass sich das obere Schneidmesser 3 als aktives Schneidmesser 3 herausbilden kann. Es sind Führungsmittel vorgesehen, die eine Zwangsführung bilden, so dass der bewegte Schneidguthalter 2 zwangsweise die erforderliche Bewegung der Zuführrampen 4 und damit der aktiven Schneidkanten des Schneidmessers 3 bewirkt.

Die Führungsmittel sind von Führungselementen 5 gebildet, die seitlich von den Zuführrampen 4 hervorspringen und in den Bewegungsbereich des Schneidguthalters 2 hineinragen. Im dargestellten Ausführungsbeispiel sind diese Führungselemente 5 Führungszapfen, die durch die Seitenwandung des Trägers des Lebensmittelhobels hindurch ragen. Hierzu sind in dieser Seitenwandung entsprechende Langlöcher vorgesehen, die längs eines um die Schwenkachse S verlaufenden Kreises angeordnet sind. Dies ermöglicht die Bewegung der Führungselemente 5 über den gesamten Schwenkbereich der Zuführrampe 4 und realisiert gleichzeitig durch die begrenzte Länge der langlochartigen Öffnungen einen oberen und unteren Anschlag.

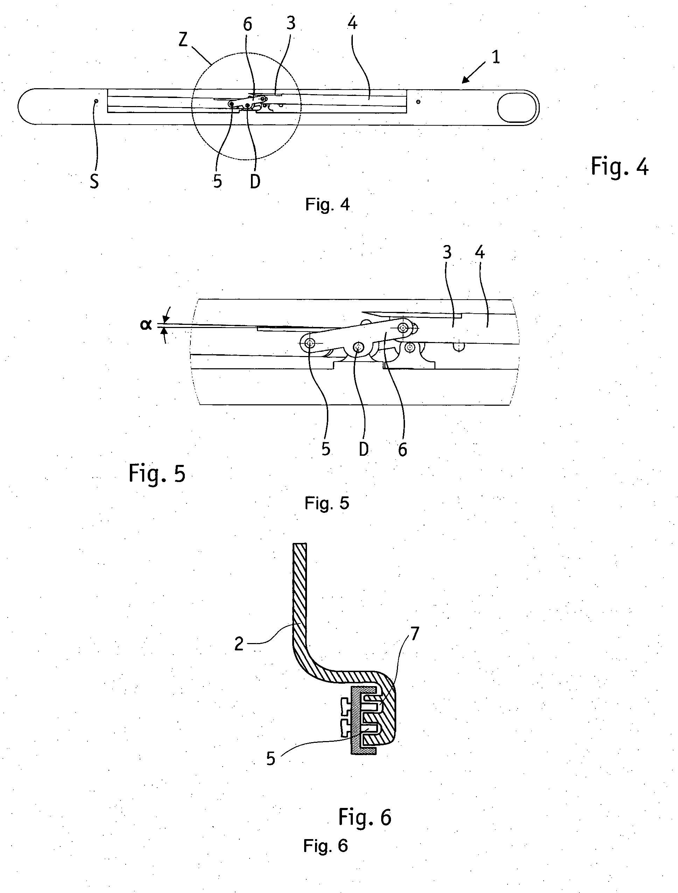

Im dargestellten Ausführungsbeispiel ist der Schneidguthalter 2 in an den Seitenflächen des Trägers des Lebensmittelhobels ausgebildeten, schienenartigen Einsenkungen gehalten. Hierzu weist der Schneidguthalter 2 die seitlichen Seitenwangen auf, die hier nach innen mit einer Verdickung in diese schienenartigen Einsenkungen hervorspringen. In diesen verdickten Bereichen sind die Führungsnuten 7 vorgesehen, die wiederum in die Führungselemente 5 eingefädelt werden können. Die Führungsnuten 7 sind in einer Schnittansicht in Figur 6 dargestellt, die in vergrößerter Ansicht den Bereich einer der Seitenwangen des Schneidguthalters 2 zeigt.

In der in Figur 1 dargestellten Anfangsposition des Schneidguthalters 2 sind die Führungselemente 5 noch nicht in die Führungsnuten 7 eingefädelt. Dies geschieht erst während der Bewegung des Schneidguthalters 2. Die Führungselemente 5 sind, wie am besten aus den Figuren 4 und 5 ersichtlich ist, an einer um eine Drehachse D drehbaren Betätigungswippe 6 angeordnet. Die Führungsmittel sind hier also nicht unmittelbar an den Zuführrampen 4 angeordnet, sondern nur mittelbar über die Betätigungswippe 6 mit den Zuführrampen 4 verbunden.

Die Zuführrampen 4 weisen im Bereich der Verbindung mit der Betätigungswippe 6 Langlöcher auf, über die die Zuführrampen 4 mit der Betätigungswippe 6 drehbeweglich und in gewissem Maße auch längsbeweglich verbunden sind. Dies bewirkt, dass eine Drehung der am Träger des Lebensmittelhobels gelagerten Betätigungswippe 6 um die Drehachse D ein Verschwenken der Zuführrampen 4 um die Schwenkachsen S bewirkt.

Wird nun der Schneidguthalter 2 in Richtung der vorderen Führungselemente 5 bewegt, fädelt er zunächst die vorderen Führungselemente 5 in eine untere Nut in den Seitenwangen ein. Diese untere Nut ist etwas nach unten geführt, so dass sich aufgrund der weiteren Bewegung eine Drehung der Betätigungswippe 6 in Folge der durch die Nut nach unten gedrückten vorderen Führungselemente 5 ergibt. Dies wiederum bewirkt, dass die hinteren Führungselemente 5 etwas nach oben gestellt werden, so dass die hinteren Führungselemente 5 in eine zweite Führungsnut 7 eingefädelt werden können, die parallel zur ersten Führungsnut 7, allerdings oberhalb dieser ersten Führungsnut 7 verläuft. Hierdurch werden die hinteren Führungselemente 5 in der oberen Führungsnut 7 gehalten, so dass die hintere Zuführrampe 4 festgelegt oder sogar etwas angehoben ist. Auf diese Weise ergibt sich ein Spalt definierter Größe zwischen den Schneidmessern 3 der vorderen Zuführrampe 4 einerseits und der hinteren Zuführrampe 4 andererseits.

Wird der Schneidguthalter 2 nun in Richtung des hinteren Anschlages bewegt, werden auf den hinteren Seiten die beiden Führungselemente 5 auf jeder Seite des Lebensmittelhobels wieder aus den Führungsnuten 7 herausgeführt, so dass sie dann wieder frei beweglich sind. Wird der Schneidguthalter 2 dann in die entgegengesetzte Richtung bewegt, dreht sich der oben beschriebene Führungsprozess herum. Die dann vorne liegenden, hinteren Führungselemente 5 werden dann in die untere Führungsnut 7 und die dann hinten liegenden vorderen Führungselemente 5 in die obere Führungsnut 7 eingefädelt, so dass sich nun der gleiche Schneideffekt ergibt.

Da der Schneidguthalter 2 zu beiden Seiten Ausleger aufweist, die groß genug sind, dass auch in den Extremstellungen des Schneidguthalters 2 die Schneidmesser 3 abgedeckt sind, ist jegliche Verletzungsgefahr verhindert. Auf diese Weise lässt sich ein besonders wirksamer, leicht zu reinigender und kostengünstig herstellbarer Lebensmittelhobel aufbauen.

Die dargestellte Ausführungsform stellt nur ein mögliches Beispiel eines erfindungsgemäßen Hobels dar, wobei die Erfindung auch über andere Ausgestaltungen ausführbar ist.

### Bezugszeichenliste:

- 1: Gleitbahn
- 2: Schneidguthalter
- 3: Schneidmesser
- 4: Zuführrampe
- 5: Führungselemente
- 6: Betätigungswippe
- 7: Führungsnut
- α: Schwenkwinkel der ersten Zuführrampe
- D: Drehpunkt der Betätigungswippe
- S: Schwenkachse der Zuführrampe
- V: Vorschubrichtung

## Patentansprüche

1. Lebensmittelhobel mit einer Gleitbahn (1) und einem längs der Gleitbahn (1) hin- und her beweglichen Schneidguthalter (2) für zumindest ein in Scheiben zu schneidendes Lebensmittel, wobei die Gleitbahn (1) wenigstens ein Schneidmesser (3) aufweist, das über eine, von dem bewegten Schneidguthalter (2) betätigte Zwangsführung relativ zur Gleitbahn (1) derart beweglich ist, dass in zumindest einer Vorschubrichtung (V) der vor dem Schneidmesser (3) angeordnete Abschnitt der Gleitbahn (1) als Zuführrampe (4) ausgebildet ist, die relativ zur Schneide des Schneidmessers (3) tiefer angeordnet ist, **dadurch gekennzeichnet, dass** zur Bildung einer bidirektionalen Schneidfunktion in der Gleitbahn (1) zumindest ein Paar von zwei gegenüberliegenden, jeweils in eine der Vorschubrichtungen wirkenden, einander gegenüberliegenden Zuführrampen (4) vorgesehen ist, die an den an die gegenüberliegende Zuführrampe (4) angrenzenden Enden jeweils wenigstens ein Schneidmesser (3) aufweisen und an dem, dem Schneidmesser (3) gegenüberliegenden Ende um eine Schwenkachse (S) schwenkbar gelagert sind, wobei die Zwangsführung derart ausgebildet ist, dass bei Bewegen des Schneidguthalters (2) über zumindest einen Teil einer Zuführrampe (4) wenigstens eine der Zuführrampen (4) aus einer Ruhelage, in der die Schneidmesser (3) der Zuführrampen (4) in einer Ebene liegen, zwangsweise relativ zu der gegenüberliegenden Zuführrampe (4) in einer Weise verschwenkt ist, dass zwischen den Zuführrampen ein Schneidspalt angeordnet ist, dessen in Vorschubrichtung gesehen oberer Rand von zumindest einem Schneidmesser begrenzt ist.

2. Lebensmittelhobel nach Anspruch 1, **dadurch gekennzeichnet, dass** der Schneidguthalter (2) über Seitenwangen an der Gleitbahn (1) geführt ist, wobei die Seitenwangen auf beiden Seiten parallel zu den Seiten der Gleitbahn (1), mit dem Schneidguthalter (2) verschiebbar, angeordnet sind und wobei die Zwangsführung von Führungselementen (5) gebildet ist, die in Führungsnuten (7) eingreifen, die derart ausgebildet sind, dass die Führungselemente (5) wenigstens eine der Zuführrampen (4) aus der Ruhelage herausbewegen.

3. Lebensmittelhobel nach einem der vorhergehenden Ansprüche, **dadurch gekennzeichnet, dass** die insbesondere zapfenartigen Führungselemente (5) an der Zuführrampe (4) und die Führungsnuten (7) an dem Schneidguthalter (2), insbesondere an den Seitenwangen, angeordnet sind.

4. Lebensmittelhobel nach einem der vorhergehenden Ansprüche, **dadurch gekennzeichnet, dass** die insbesondere zapfenartigen Führungselemente (5) unterhalb der Zuführrampe (4) angeordnet sind und die Zuführrampe (4) nach oben drücken, wobei die Führungsnuten (7) an dem Schneidguthalter (2) angeordnet sind.

5. Lebensmittelhobel nach einem der vorhergehenden Ansprüche, **dadurch gekennzeichnet, dass** die insbesondere zapfenartigen Führungselemente (5) an dem Schneidguthalter (2) und die Führungsnuten (7) an der Zuführrampe (4) angeordnet sind.

6. Lebensmittelhobel nach einem der vorhergehenden Ansprüche, **dadurch gekennzeichnet, dass** die Zwangsführung derart ausgebildet ist, dass eine der Zuführrampen (4) durch die Zwangsführung um die Schwenkachse (S) und um einen Schwenkwinkel (α) verschwenkt und die gegenüberliegende Zuführrampe (4) durch die Zwangsführung festgelegt ist, wobei durch die Höhendifferenz der Schneiden an den gegenüberliegenden Zuführrampen (4) die Dicke der abgehobelten Scheibe des Lebensmittels bestimmt ist.

7. Lebensmittelhobel nach einem der vorhergehenden Ansprüche, **dadurch gekennzeichnet, dass** eine insbesondere unterhalb der Zuführrampen (4) angeordnete, um einen Drehpunkt (D) drehbare Betätigungswippe (6) vorgesehen ist, die einen ersten Stellbereich zum Hochstellen einer ersten Zuführrampe (4) und einen zweiten Stellbereich zum Hochstellen einer, der ersten Zuführrampe (4) gegenüberliegenden zweiten Zuführrampe (4) aufweist, wobei die Zwangsführung die Drehung der drehbaren Betätigungswippe (6) bewirkt.

8. Lebensmittelhobel nach dem vorhergehenden Anspruch, **dadurch gekennzeichnet, dass** die Führungselemente (5) an der Betätigungswippe (6) angeordnet sind.

9. Lebensmittelhobel nach dem vorhergehenden Anspruch, **dadurch gekennzeichnet, dass** zwei übereinander verlaufende Führungsnuten (7) vorgesehen sind, wobei die Zwangsführung derart ausgebildet ist, dass in Vorschubrichtung (V) des Schneidguthalters (2) gesehen zunächst die Führungselemente (5) der vorderen Zuführrampe (4) in die untere Führungsnut und dann die Führungselemente (5) der hinteren Zuführrampe (4) in die obere Führungsnut eingefädelt werden.

10. Lebensmittelhobel nach einem der beiden vorhergehenden Ansprüche, **dadurch gekennzeichnet, dass** die Betätigungswippe (6) über Lagerelemente mit in den Zuführrampen (4) vorgesehenen, langlochartigen Lageraugen in einer Weise verbunden ist, dass die Drehung der Betätigungswippe (6) um den Drehpunkt (D) ein Verschwenken zumindest einer der Zuführrampen (4) um die jeweilige Schwenkachse (S) bewirkt.

11. Lebensmittelhobel nach einem der Ansprüche 7 bis 10, **dadurch gekennzeichnet, dass** die Betätigungswippe (6) schwimmend oder fest am Lebensmittelhobel um eine zur Vorschubrichtung (V) senkrechte Achse beweglich gelagert ist.

12. Lebensmittelhobel nach einem der vorhergehenden Ansprüche, **dadurch gekennzeichnet, dass** er eine Schnitthöhenverstellung aufweist, die derart ausgebildet ist, dass der Abstand der Führungsnuten (7) relativ zur Führung des Schneidguthalters (2) verstellbar ist.

13. Lebensmittelhobel nach dem vorhergehenden Anspruch in Verbindung mit Anspruch 2, **dadurch gekennzeichnet, dass** die Führungsnuten (7) an einer zumindest abschnittsweise längs der Seitenwangen des Schneidguthalters (2) verlaufenden Schiene angeordnet sind, wobei die Schiene über insbesondere von Schrauben oder Stellhebeln gebildete Einstellmittel relativ zu den Seitenwangen verstellbar und an dem Schneidguthalter (2) gelagert ist.

14. Lebensmittelhobel nach einem der Ansprüche 1 bis 11, **dadurch gekennzeichnet, dass** er eine Schnitthöhenverstellung aufweist, die derart ausgebildet ist, dass die Seitenwangen des Schneidguthalters (2) nach außen verstellbar sind, wobei die untere Führungsnut (7) als mehrfache Nut ausgebildet ist, die eine breite äußere Nut mit einer ersten Breite und zumindest eine relativ zur ersten Nut schmalere innere Nut aufweist, so dass die Führungselemente (5) bei maximal zusammen geschobenen Seitenwangen in die engste Führungsnut (7) eingreifen und bei nach außen verstellten Seitenwangen in eine breitere Führungsnut (7) eingreifen.

15. Lebensmittelhobel nach einem der vorhergehenden Ansprüche, **dadurch gekennzeichnet, dass** die Zwangsführung Führungsmittel umfasst, die die in Ruhelage in einer Ebene befindlichen Zuführrampen (4) festlegt, wobei diese Führungsmittel insbesondere von Führungsnuten gebildet sind, die die Führungsmittel in einer oberen Position halten, sofern der Schneidguthalter (2) nicht oberhalb zumindest einer der Zuführrampen (4) angeordnet ist.

16. Lebensmittelhobel nach einem der vorhergehenden Ansprüche, **dadurch gekennzeichnet, dass** an beiden Enden der Gleitbahn (1) jeweils Federmittel angeordnet sind, die durch den Schneidguthalter (2) bei Annähern an die Umkehrposition der Vorschubbewegung (V) gespannt werden und den Schneidguthalter (2) in Richtung der Mitte der Gleitbahn (1) in eine eindeutige Position drücken, in der die Schneidmesser (3) unterhalb des Schneidguthalters (2) angeordnet sind.

## Claims

1. A food slicer comprising a sliding guide (1) and a holder (2) for food to be cut, which can be moved back and forth along the sliding guide (1), for at least one food product, which is to be cut into slices, wherein the sliding guide (1) encompasses at least one cutting blade (3), which can be moved via a positive guide, which is to be operated by the moved holder (2) for the food to be cut, relative to the sliding guide (1) such that, in at least one feed direction (V), the section of the sliding guide (1), which is arranged upstream of the cutting blade (3), is embodied as feed ramp (4), which is arranged lower relative to the cutting edge of the cutting blade (3), **characterized in that**, to form a bidirectional cutting function, provision is made in the sliding guide (1) for at least one pair of two opposite feed ramps (4), which in each case act in one of the feed directions and which are located opposite one another and which in each case encompass at least one cutting blade (3) at the ends adjacent the opposite feedings ramp (4) and, at the end located opposite the cutting blade (3), are supported so as to be pivotable about a pivot axis (S), wherein the positive guide is embodied such that, in response to the movement of the holder (2) for the food to be cut across at least a part of feed ramp (4) at least one of the feed ramps (4) is pivoted by force relative to the opposite feed ramp (4) from a rest position, in which the cutting blades (3) of the feed ramps (4) are located in a plane such that a cutting gap is arranged between the feed ramps, the upper edge of said cutting gap being defined by at least one cutting blade, viewed in feed direction.

2. The food slicer according to claim 1, **characterized in that** the holder (2) for the food to be cut, is guided across lateral flanges at the sliding guide (1), wherein the lateral flanges are arranged on both sides parallel to the sides of the sliding guide (1), so as to be displaceable with the holder (2) for the food to be cut, and wherein the positive guide is formed by guide elements (5), which engage with guide grooves (7), which are embodied such that the guide elements (5) move at least one of the feed ramps (4) out of the rest position.

3. The food slicer according to one of the preceding claims, **characterized in that** the in particular cone-like guide elements (5) are arranged at the feed ramp (4) and the guide grooves (7) are arranged at the holder (2) for food to be cut, in particular at the lateral flanges.

4. The food slicer according to one of the preceding claims, **characterized in that** in particular cone-like guide elements (5) are arranged below the feed ramp (4) and press the feed ramp (4) upwards, wherein the guide grooves (7) are arranged at the holder (2) for the food to be cut.

5. The food slicer according to one of the preceding claims, **characterized in that** the in particular cone-like guide elements (5) are arranged at the holder (2) for food to be cut and the guide grooves (7) are arranged at the feed ramp (4).

6. The food slicer according to one of the preceding claims, **characterized in that** the positive guide is embodied such that one of the feed ramps (4) is pivoted by the positive guide about the pivot axis (S) and about a pivot angle (α) and the opposite feed ramp (4) is defined by the positive guide, wherein the thickness of the sliced slice of the food is determined by means of the height difference of the cutting blades at the opposite feed ramps (4).

7. The food slicer according to one of the preceding claims, **characterized in that** provision is made for an actuating rocker (6), which is in particular arranged below the feed ramps (4) and which can be rotated about a centre of rotation (D) and which encompasses a first adjustment range for raising a first feed ramp (4) and a second adjustment range for raising a second ramp (4) located opposite the first feed ramp (4), wherein the positive guide effects the rotation of the rotatable actuating rocker (6).

8. The food slicer according to the preceding claim, **characterized in that** the guide elements (5) are arranged at the actuating rocker (6).

9. The food slicer according to the preceding claim, **characterized in that** provision is made for two guide grooves (7), which run on top of one another, wherein the positive guide is embodied such that, viewed in feed direction (V) of the holder (2) for the food to be cut, the guide elements (5) of the front feed ramp (4) are initially threaded into the lower guide groove and the guide elements (5) of the rear feed ramp (4) are then threaded into the upper guide groove.

10. The food slicer according to one of the two preceding claims, **characterized in that** the actuating rocker (6) is connected to the elongated hole-like bearing lugs, which are provided in the feed ramps (4), via bearing elements in such a manner that the rotation of the actuating rocker (6) about the centre of rotation (D) effects a pivoting of at least one of the feed ramps (4) about the respective pivot axis (S).

11. The food slicer according to one of claims 7 to 10, **characterized in that** the actuating rocker (6) is supported on the food slicer so as to float or in a fixed manner, so as to be movable about an axis, which is vertical to the feed direction (V).

12. The food slicer according to one of the preceding claims, **characterized in that** it encompasses a cutting height adjustment, which is embodied such that the distance of the guide grooves (7) can be adjusted relative to the guide of the holder (2) for the food to be cut.

13. The food slicer according to the preceding claim in combination with claim 2, **characterized in that** the guide grooves (7) are arranged at a rail, which runs along the lateral flanges of the holder (2) for the food to be cut, at least in sections, wherein the rail is adjustable relative to the lateral flanges via adjusting means, which are formed in particular by screws or adjusting levers, and is supported at the holder (2) for the food to be cut.

14. The food slicer according to one of claims 1 to 11, **characterized in that** it encompasses a cutting height adjustment, which is embodied such that the side flanges of the holder (2) for the food to be cut can be adjusted towards the outside, wherein the lower guide groove (7) is embodied as multiple groove, which encompasses a wide outer groove comprising a first width and at least an inner groove, which is narrower relative to the first groove, so that the guide elements (5) engage with the narrowest guide groove (7) when the side flanges are pushed together to a maximum and engage with a wider guide groove (7) when the side flanges are adjusted to the outside.

15. The food slicer according to one of the preceding claims, **characterized in that** the positive guide comprises guide means, which fix feed ramps (4), which, in rest position, are located in a plane, wherein these guide means are formed in particular by guide grooves, which hold the guide means in an upper position, provided that the holder (2) for the food to be cut is not arranged above at least one of the feed ramps (4).

16. The food slicer according to one of the preceding claims, **characterized in that** spring means are in each case arranged at both ends of the sliding guide (1), said spring means being tensioned by means of the holder (2) for the food to be cut when approaching the reverse position of the feed movement (V), and which press the holder (2) for the food to be cut in the direction of the centre of the sliding guide (1) into a clear position, in which the cutting blades (3) are arranged below the holder (2) for the food to be cut.

## Revendications

1. Mandoline de cuisine avec une glissière (1) et un poussoir (2) de produit à trancher déplaçable en aller et retour le long de la glissière (1) pour au moins un produit alimentaire à découper en tranches, la glissière (1) comportant au moins un couteau (3) qui par l'intermédiaire d'un guidage forcé actionné par le poussoir (2) de produit à trancher déplacé est déplaçable par rapport à la glissière (1) de sorte que dans au moins une direction d'avance (V), la partie de la glissière (1) placée à l'avant du couteau (3) soit conçue en tant que rampe d'amenage (4) qui est placée plus bas que la lame du couteau (3), **caractérisée en ce que** pour créer une fonction de coupe bidirectionnelle, il est prévu dans la glissière (1) au moins une paire de deux rampes d'amenage (4) mutuellement opposées, agissant chacune dans une direction d'avance, qui sur les extrémités adjacentes aux rampes d'amenage (4) opposées comportent chacune au moins un couteau (3) et qui sur l'extrémité opposée à un couteau (3) sont logées en étant pivotantes autour d'un axe de pivotement (S), le guidage forcé étant conçu de telle sorte que lors du déplacement du poussoir (2) de produit à trancher sur au moins une partie d'une rampe d'amenage (4), au moins une rampe d'amenage (4) soit pivotée d'une position de repos dans laquelle les couteaux (3) des rampes d'amenage (4) se situent dans un plan, de manière forcée par rapport aux rampes d'amenage (4) opposées de façon telle qu'entre les rampes d'amenage soit placée une fente de coupe, dont le bord supérieur, vu en direction d'avance est délimité par au moins un couteau.

2. Mandoline de cuisine selon la revendication 1, **caractérisée en ce que** le poussoir (2) de produit à trancher est guidé par l'intermédiaire de joues latérales sur la glissière (1), les joues latérales étant placées sur les deux côtés à la parallèle des côtés de la glissière (1), en étant déplaçables avec le poussoir (2) de produit à trancher et le guidage forcé étant formé par des éléments de guidage (5) qui s'engagent dans des rainures de guidage (7) qui sont conçues de telle sorte que les éléments de guidage (5) déplacent au moins l'une des rampes d'amenage (4) hors de la position de repos.

3. Mandoline de cuisine selon l'une quelconque des revendications précédentes, **caractérisée en ce que** les éléments de guidage (5) notamment de type tenons sont placés sur la rampe d'amenage (4) et les rainures de guidage (7) sont placées sur le poussoir (2) de produit à trancher, notamment sur les joues latérales.

4. Mandoline de cuisine selon l'une quelconque des revendications précédentes, **caractérisée en ce que** les éléments de guidage (5) notamment de type tenons sont placés en-dessous de la rampe d'amenage (4) et poussent vers le haut la rampe d'amenage (4), les rainures de guidage (7) étant placées sur le poussoir (2) de produit à trancher.

5. Mandoline de cuisine selon l'une quelconque des revendications précédentes, **caractérisée en ce que** les éléments de guidage (5) notamment de type tenons sont placés sur le poussoir (2) de produit à trancher et les rainures de guidage (7) sont placées sur la rampe d'amenage (4).

6. Mandoline de cuisine selon l'une quelconque des revendications précédentes, **caractérisée en ce que** le guidage forcé est conçu de telle sorte que l'une des rampes de guidage (4) soit pivotée par le guidage forcé autour de l'axe de pivotement (S) et autour d'un angle de pivotement (α) et **en ce que** la rampe d'amenage (4) opposée est fixée par le guidage forcé, l'épaisseur de la tranche coupée étant définie par la différence de hauteur des lames sur les rampes de guidage (4) opposées.

7. Mandoline de cuisine selon l'une quelconque des revendications précédentes, **caractérisée en ce qu'**il est prévu une bascule de manoeuvre (6) rotative autour d'un point de rotation (D), placée notamment en-dessous des rampes de guidage (4) qui comporte une première plage de réglage pour relever une première rampe de guidage (4) et une deuxième plage de réglage pour relever une deuxième rampe de guidage (4) opposée à la première rampe de guidage (4), le guidage forcé provoquant la rotation de la bascule de manoeuvre (6) rotative.

8. Mandoline de cuisine selon la revendication précédente, **caractérisée en ce que** les éléments de guidage (5) sont placés sur la bascule de manoeuvre (6).

9. Mandoline de cuisine selon la revendication précédente, **caractérisée en ce que** deux rainures de guidage (7) s'étendant l'une au-dessus de l'autre sont prévues, le guidage forcé étant conçu de telle sorte que vu dans la direction d'avance (V) du poussoir (2) de produit à trancher, d'abord les éléments de guidage (5) de la rampe d'amenage (4) antérieure s'insèrent dans la rainure de guidage inférieure et ensuite les éléments de guidage (5) de la rampe d'amenage (4) postérieure s'insèrent dans la rainure de guidage supérieure.

10. Mandoline de cuisine selon l'une quelconque des deux revendications précédentes, **caractérisée en ce que** la bascule de manoeuvre (6) est reliée par l'intermédiaire d'éléments de support avec des oeillets de support de type d'un trou oblong prévus dans les rampes d'amenage (4) d'une façon telle que la rotation de la bascule de manoeuvre (6) autour du point de rotation (D) provoque un pivotement d'au moins l'une des rampes d'amenage (4) autour de l'axe de pivotement (S) concerné.

11. Mandoline de cuisine selon l'une quelconque des revendications 7 à 10, **caractérisée en ce que** la bascule de manoeuvre (6) est logée de manière flottante ou fixe sur la mandoline de cuisine, autour d'un axe perpendiculaire à la direction d'avance (V).

12. Mandoline de cuisine selon l'une quelconque des revendications précédentes, **caractérisée en ce qu'**elle comporte un ajustage de la hauteur de coupe qui est conçu de telle sorte que l'écart entre les rainures de guidage (7) et le guidage du poussoir (2) de produit à trancher soit réglable.

13. Mandoline de cuisine selon la revendication précédente, en association avec la revendication 2, **caractérisée en ce que** les rainures de guidage (7) sont placées sur une coulisse s'étendant au moins par sections le long des joues latérales du poussoir (2) pour produit à trancher, la coulisse étant logée par l'intermédiaire de moyens de réglage formés notamment par des vis ou des leviers de réglage en étant réglable par rapport aux joues latérales et sur le poussoir (2) de produit à trancher.

14. Mandoline de cuisine selon l'une quelconque des revendications 1 à 11, **caractérisée en ce qu'**elle comporte un ajustage de la hauteur de coupe qui est conçu de telle sorte que les joues latérales du poussoir (2) de produit à trancher soient ajustables vers l'extérieur, la rainure de guidage (7) inférieure étant conçue en tant que rainure multiple qui comporte une rainure extérieure large d'une première largeur et au moins une rainure intérieure plus étroite que la première rainure, de sorte que lorsque les joues latérales sont rapprochées au maximum, les éléments de guidage (5) s'engagent dans la rainure de guidage (7) la plus étroite et lorsque les joues latérales sont déplacées vers l'extérieur, s'engagent dans une rainure de guidage (7) plus large.

15. Mandoline de cuisine selon l'une quelconque des revendications précédentes, **caractérisée en ce que** le guidage forcé comprend des moyens de guidage qui fixent les rampes d'amenage (4) qui dans la position de repos se trouve dans un plan, lesdits moyens de guidage étant formés notamment par des rainures de guidage qui maintiennent les moyens de guidage dans une position supérieure, dans la mesure où le poussoir (2) de produit à trancher n'est pas placé au-dessus d'au moins l'une des rampes d'amenage (4).

16. Mandoline de cuisine selon l'une quelconque des revendications précédentes, **caractérisée en ce que** sur les deux extrémités de la glissière (1) sont placés chaque fois des moyens à ressort qui à l'approche de la position de renvoi du déplacement d'avance (V) sont tendus par le poussoir (2) de produit à trancher et qui poussent le poussoir (2) de produit à trancher en direction du centre de la glissière (1), dans une position univoque dans laquelle les couteaux (3) sont placés en dessous du poussoir (2) de produit à trancher.
